# EUROPEAN PATENT APPLICATION

(11) **EP 4 645 430 A1**
(43) Date of publication of application: **05.11.2025**
(21) Application number: 25169170.5
(22) Date of filing: 08.04.2025
(51) Int. Cl.: H01M 4/131, H01M 4/36, H01M 4/505, H01M 4/525, H01M 4/58

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(30) Priority: 29.04.2024 KR 20240057026
(71) Applicant: SAMSUNG SDI CO., LTD., Yongin-si, Gyeonggi-do 17084 (KR)
(72) Inventor: KIM, Young-Ki, 17084 Yongin-si (KR); CHOI, Aram, 17084 Yongin-si (KR); KIM, Sangmi, 17084 Yongin-si (KR); DOO, Sungwook, 17084 Yongin-si (KR); KANG, Gwiwoon, 17084 Yongin-si (KR); LEE, Soonrewl, 17084 Yongin-si (KR)
(74) Representative: Marks & Clerk LLP

(57) **Abstract**

Provided are a positive electrode for a rechargeable lithium battery and a rechargeable lithium battery including the same, and for example, a positive electrode for a rechargeable lithium battery, including a current collector, a first positive electrode active material layer on the current collector, and a second positive electrode active material layer on the first positive electrode active material layer. The first positive electrode active material layer includes a first particle having an olivine structure, and a second particle having a layered structure, and the second positive electrode active material layer includes a third particle having an olivine structure. The first particle and the third particle are each in the form of a single particle, and the second particle has a greater average particle diameter than each of the first particle and the third particle.

## Description

### BACKGROUND

### 1. Field

Embodiments of the present disclosure relate to a positive electrode active material for a rechargeable lithium battery, a positive electrode including the same, and a rechargeable lithium battery including the same, and for example, to a positive electrode active material including an olivine-based lithium compound, a positive electrode active material including a layered lithium compound, a positive electrode including the same, and a rechargeable lithium battery including the same.

### 2. Description of the Related Art

Lately, the rapid spread of battery-powered electronics, such as mobile phones, laptop computers, and electric vehicles, has driven a sharp rise in interest in rechargeable batteries having high energy density and high capacity. Accordingly, extensive research efforts are directed towards improving the performance of rechargeable lithium batteries.

Rechargeable lithium batteries include a positive electrode and a negative electrode, each including an active material that may allow for intercalation and deintercalation of lithium ions, and an electrolyte solution, and produce electrical energy from redox reactions that take place as lithium ions are intercalated into or deintercalated from the positive electrode and the negative electrode.

### SUMMARY

Embodiments of the present disclosure provide a positive electrode active material that is economical and has high energy density, high average voltage, and excellent lifetime.

Embodiments of the present disclosure also provide a positive electrode that is economical and has high energy density, high average voltage, and excellent lifetime.

An embodiment of the present disclosure provides a positive electrode for a rechargeable lithium battery, including a current collector, a first positive electrode active material layer on the current collector, and a second positive electrode active material layer on the first positive electrode active material layer.

The first positive electrode active material layer includes a first particle represented by Formula 1 below and having an olivine structure, and a second particle represented by Formula 2 below and having a layered structure,
the second positive electrode active material layer includes a third particle represented by Formula 3 below and having an olivine structure, and
the first particle and the third particle are each in the form of a single particle.

The second particle has a greater average particle diameter than each of the first particle and the third particle.

[Formula 1] Liₐ₁Mn_{z1}Feₓ₁B1_{y1}PO_{4-c1}

In Formula 1 above, B1 is at least one element selected from the group consisting of Al, Ti, V, and Mg, and 0.8<a1≤1.2, 0.4≤z1≤0.8, 0.2≤x1≤0.6, 0≤y1≤0.05, 0≤c1 ≤0.05, and x1 + y1 + z1 = 1 are satisfied.

[Formula 2] Liₐ₂Niₓ₂Co_{y2}Mn_{z2}B2_{b2}O_{2-c2}

In Formula 2 above, B2 is at least one element selected from the group consisting of Al, Ti, Mg, Zr, Mo, and Nb, and 0.8≤a2≤1.2, 0.5≤x2≤0.8, 0.0≤y2≤0.10, 0.1≤z2≤0.35, 0≤b2≤0.1 0≤c2≤0.05, and x2 + y2 + z2 + b2 = 1 are satisfied.

[Formula 3] Liₐ₃Mn_{z3}Feₓ₃B3_{y3}PO_{4-c3}

In Formula 3 above, B3 is at least one element selected from the group consisting of Al, Ti, V, and Mg, and 0.8<a3≤1.2, 0.4≤z3≤0.8, 0≤x3≤0.6, 0≤y3≤0.05, 0≤c3≤0.05, and x3 + y3 + z3 = 1 are satisfied.

Another embodiment of the present disclosure provides a positive electrode for a rechargeable lithium battery, including a current collector, a first positive electrode active material layer on the current collector, and a second positive electrode active material layer on the first positive electrode active material layer.

The first positive electrode active material layer includes a first particle represented by Formula 1 above and having an olivine structure, a second particle represented by Formula 2 above and having a layered structure, and a first functional additive,

the second positive electrode active material layer includes a third particle represented by Formula 3 above and having an olivine structure, and a second functional additive, and

the first functional additive in the first positive electrode active material layer has a lower weight ratio than the second functional additive in the second positive electrode active material layer.

At least some of the above and other features of the invention are set out in the claims.

### BRIEF DESCRIPTION OF THE DRAWINGS

The accompanying drawings are included to provide a further understanding of the subject matter of the present disclosure, and are incorporated in and constitute a part of this specification. The drawings illustrate embodiments of the present disclosure and, together with the description, serve to explain principles of the present disclosure. In the drawings:
FIG. 1 is a simplified conceptual view showing a rechargeable lithium battery according to embodiments of the present disclosure;
FIGS. 2-5 are schematic views showing rechargeable lithium batteries according to embodiments, in which FIG. 2 shows a cylindrical battery, FIG. 3 shows a prismatic battery, and FIGS. 4-5 show pouch-type batteries;
FIG. 6 is a cross-sectional view showing a positive electrode for a rechargeable lithium battery according to embodiments of the present disclosure;
FIG. 7 is an enlarged view showing a first positive electrode active material layer of a rechargeable lithium battery according to embodiments of the present disclosure;
FIG. 8 is an enlarged view showing a second positive electrode active material layer of a rechargeable lithium battery according to embodiments of the present disclosure;
FIG. 9 is a pair of scanning electron microscope (SEM) images showing a first particle according to an embodiment of the present disclosure;
FIG. 10 is a pair of SEM images showing a second particle according to an embodiment of the present disclosure; and

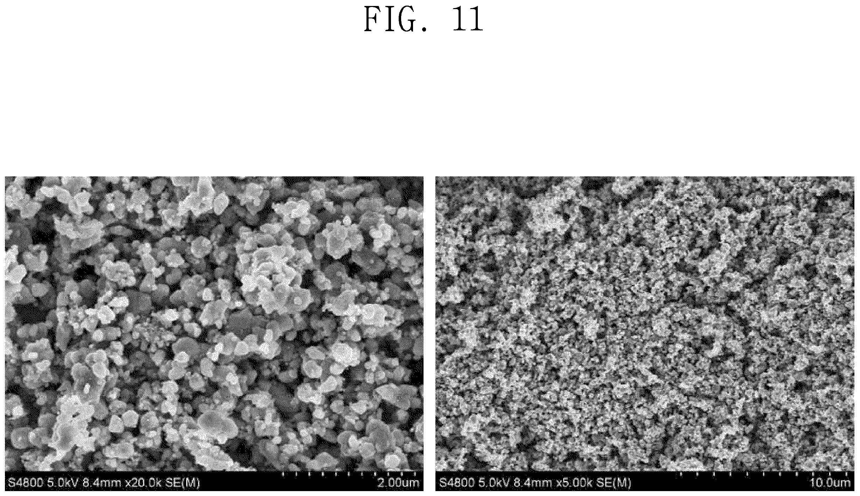

FIG. 11 is a pair of SEM images showing a third particle according to an embodiment of the present disclosure.

### DETAILED DESCRIPTION

Hereinafter, embodiments of the present disclosure will be described clearly and in more detail to such an extent that those of ordinary skill in the art can easily implement embodiments of the present disclosure. In order to sufficiently understand the configuration and effects of the subject matter of the present disclosure, example embodiments of the present disclosure will be described with reference to the accompanying drawings. It should be noted, however, that the present disclosure is not limited to the following embodiments, and the subject matter of the present disclosure may be implemented in various suitable forms and variously modified. The embodiments herein are provided so that the present disclosure will be thorough and complete and will fully convey the scope of the present disclosure to those having ordinary skill in the art.

Herein, it will be understood that if a component is referred to as being on another component, the component may be directly on another component, or an intervening third component may be present. In the drawings, thicknesses of components may be exaggerated for effectively describing technical contents. Like reference numerals refer to like elements throughout.

Unless otherwise specified herein, the expression of a singular form may include the expression of a plural form. In embodiments, unless otherwise specified, the phrase "A or B" may indicate "A but not B", "B but not A", or "A and B". The terms "includes," "comprises," "including," and/or "comprising" used herein do not exclude the presence or addition of one or more other components.

As used herein, the term "combination thereof" may refer to a mixture, a stack, a composite, a copolymer, an alloy, a blend, and/or a reaction product.

Unless otherwise defined herein, a particle diameter may be an average particle diameter. In embodiments, a particle diameter may be defined as an average particle diameter (D50) indicating the diameter of particles having a cumulative volume of 50 volume% in a particle size distribution. The average particle diameter (D50) may be measured by any suitable method generally used in the art, for example, by a particle size analyzer, a transmission electron micrograph, and/or a scanning electron micrograph. In embodiments, an average particle diameter (D50) value may be obtained by measuring a subject using a dynamic light-scattering-based measuring device, performing data analysis, counting the number of particles for each particle size range, and then calculating the value therefrom. In embodiments, the average particle diameter (D50) may be measured using a laser diffraction method. In the measuring using the laser diffraction method, for example, target particles are distributed in a distribution solvent, introduced into a commercially available laser diffraction particle diameter measuring device (e.g., MT 3000 available from Microtrac, Ltd.), irradiated with ultrasonic waves of about 28 kHz at a power of 60 W, and then an average particle diameter (D50) based on 50% of the particle diameter distribution in the measuring device may be calculated.

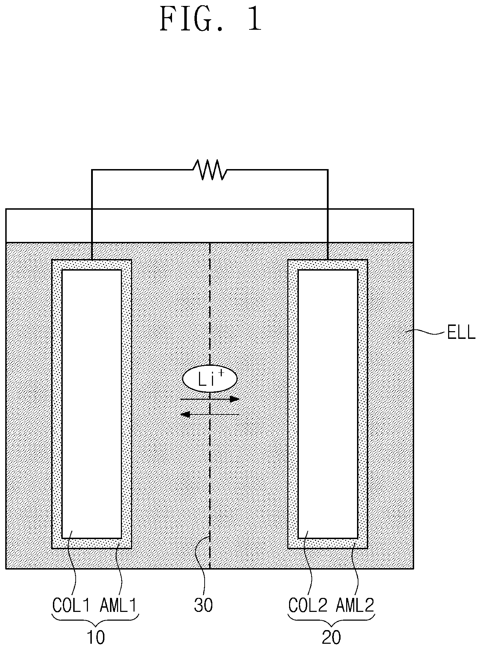

FIG. 1 is a simplified conceptual view showing a rechargeable lithium battery according to embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated with the electrolyte solution ELL.

The electrolyte solution ELL may be a medium that transfers lithium ions between the positive electrode 10 and the negative electrode 20. In the electrolyte solution ELL, the lithium ions may move through the separator 30 toward the positive electrode 10 or the negative electrode 20.

### Positive Electrode 10

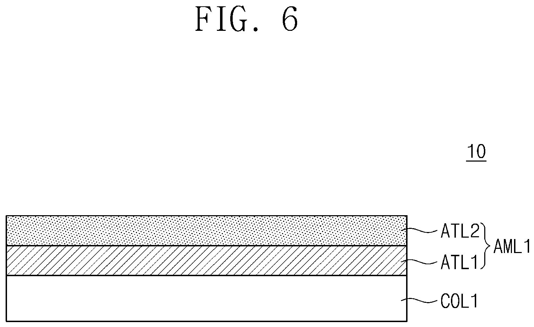

The positive electrode 10 for a rechargeable lithium battery includes a current collector COL1 and a positive electrode active material layer AML1 on the current collector. The positive electrode active material layer AML1 may include a positive electrode active material and may further include a binder and/or a conductive material (e.g., an electrically conductive material). A detailed description of the positive electrode active material layer AML1 according to embodiments of the present disclosure will be further described with reference to FIG. 6. Al may be used as the current collector COL1, but embodiments of the present disclosure not limited thereto.

### Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinyl pyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, a cellulose-based compound capable of imparting or increasing viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous (e.g., capable of being fiberized). For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any suitable material that does not cause a chemical change (e.g., does not cause an undesirable chemical change in the rechargeable lithium battery) and that conducts electrons may be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder and/or a metal fiber; a conductive polymer (e.g., an electrically conductive polymer) such as a polyphenylene derivative; or a mixture thereof.

The current collector COL2 may include a copper foil, a nickel foil, a stainless steel foil, a titanium foil, a nickel foam, a copper foam, a polymer substrate coated with a conductive metal (e.g., an electrically conductive metal), or a combination thereof.

### Negative Electrode Active Material

The negative electrode active material in the negative electrode active material layer AML2 may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, such as, for example. crystalline carbon, amorphous carbon, or a combination thereof. Examples of the crystalline carbon may be graphite such as irregular, planar, flaky, spherical, and/or fibrous natural graphite and/or artificial graphite, and examples of the amorphous carbon may be soft carbon (low-temperature fired carbon), hard carbon, mesophase pitch carbide, fired cokes, and/or the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOx (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles and amorphous carbon coated on a surface of the silicon particles. For example, the silicon-carbon composite may include a secondary particle (core) in which primary silicon particles are assembled (e.g., agglomerated), and an amorphous carbon coating layer (shell) on a surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

### Separator 30

Depending on a type or kind of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, or a combination thereof on one or both surfaces (e.g., two opposing surfaces) of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be mixed together in one coating layer, or a coating layer including an organic material and a coating layer including an inorganic material may be stacked.

### Electrolyte Solution ELL

The electrolyte solution ELL for a rechargeable lithium battery may include a non-aqueous organic solvent and a lithium salt.

The non-aqueous organic solvent may serve as a medium that transmits ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), fluoroethylene carbonate (FEC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In embodiments, if using a carbonate-based solvent, a cyclic carbonate and a chain carbonate may be mixed together and used, and the cyclic carbonate and the chain carbonate may be mixed together in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

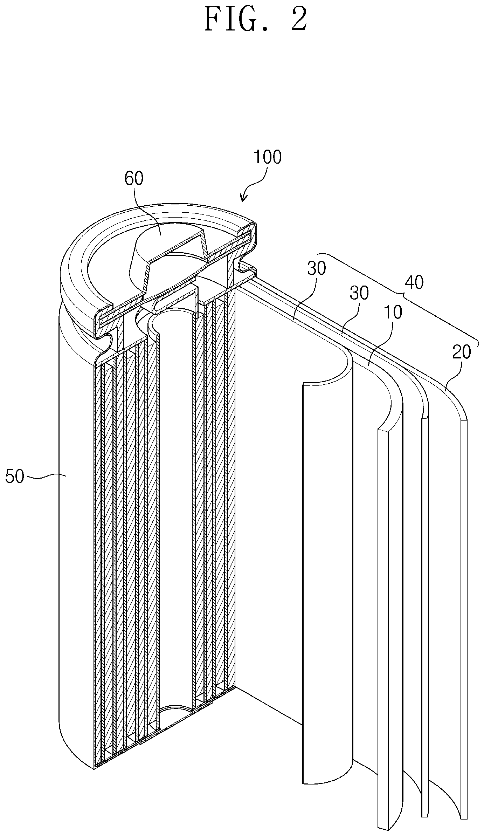

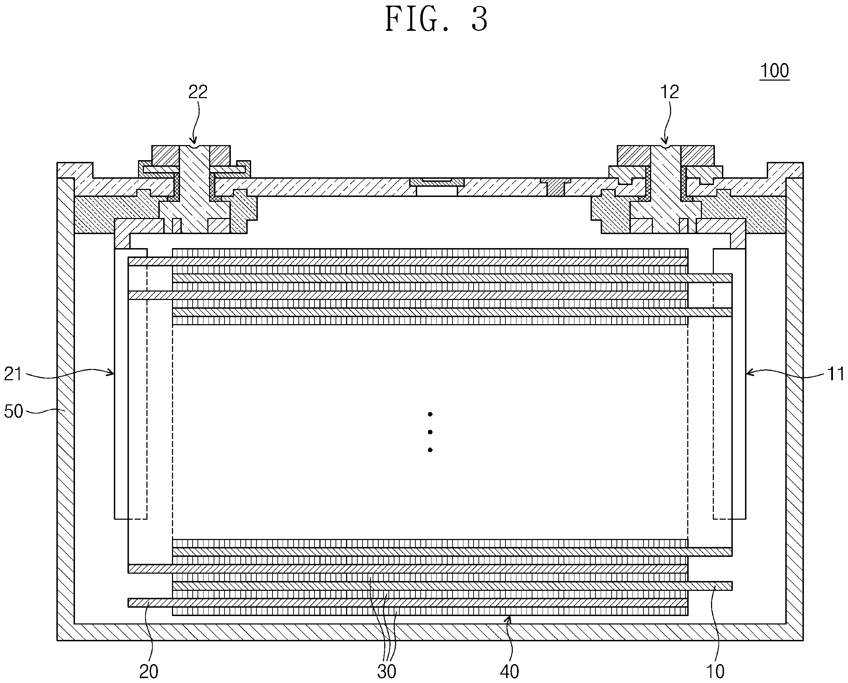

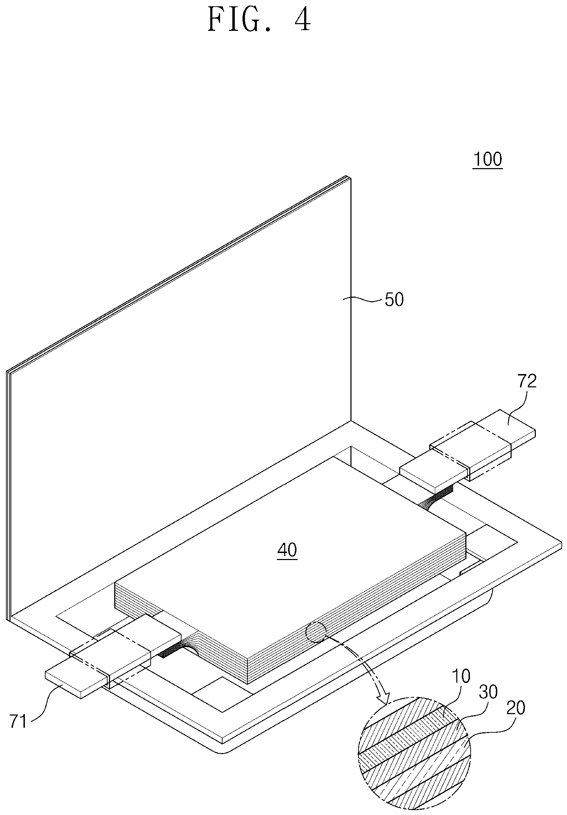

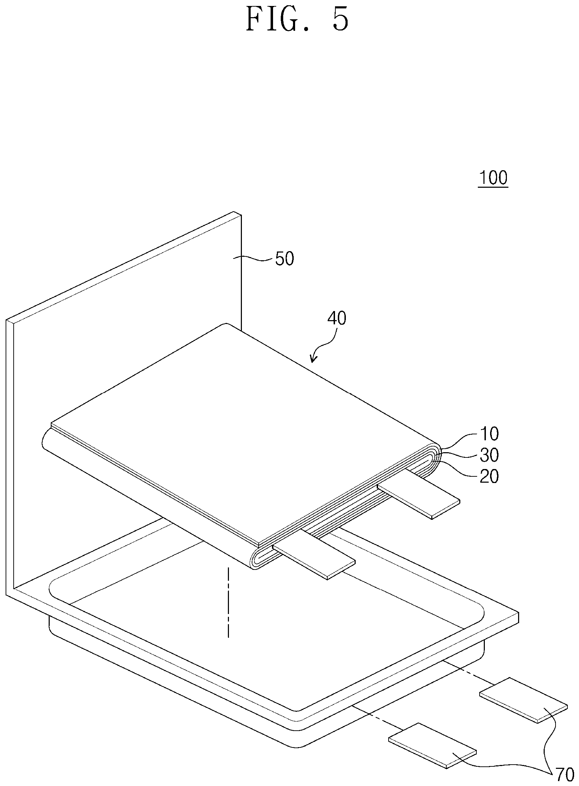

The rechargeable lithium battery may be classified into cylindrical, prismatic, pouch, or coin-type batteries, and/or the like depending on their shape. FIGS. 2-5 are schematic views illustrating rechargeable lithium batteries according to embodiments. FIG. 2 shows a cylindrical battery, FIG. 3 shows a prismatic battery, and FIGS. 4- 5 show pouch-type batteries. Referring to FIGS. 2-5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 that seals the case 50, as shown in FIG. 2. In FIG. 3, the rechargeable lithium battery 100 may include a positive electrode lead tab 11, a positive terminal 12, a negative electrode lead tab 21, and a negative terminal 22. As shown in FIGS. 4-5, the rechargeable lithium battery 100 may include an electrode tab 70 (FIG. 5), which may be, for example, a positive electrode tab 71 and a negative electrode tab 72 (FIG. 4) that serve as an electrical path for inducing the current formed in the electrode assembly 40 to the outside.

The rechargeable lithium battery according to an embodiment may be applied to automobiles, mobile phones, and/or various suitable types (or kinds) of electric devices, as non-limiting examples.

FIG. 6 is a cross-sectional view showing a positive electrode for a rechargeable lithium battery according to embodiments of the present disclosure. Referring to FIG. 6, the positive electrode 10 for a rechargeable lithium battery includes the current collector COL1 (see FIG. 1) and the positive electrode active material layer AML1 (see FIG. 1) as described above. The positive electrode active material layer AML1 includes a first positive electrode active material layer ATL1, and a second positive electrode active material layer ATL2 stacked on the first positive electrode active material layer ATL1.

Hereinafter, each of the first positive electrode active material layer ATL1 and the second positive electrode active material layer ATL2 will be described in more detail.

### First Positive Electrode Active Material Layer ATL1

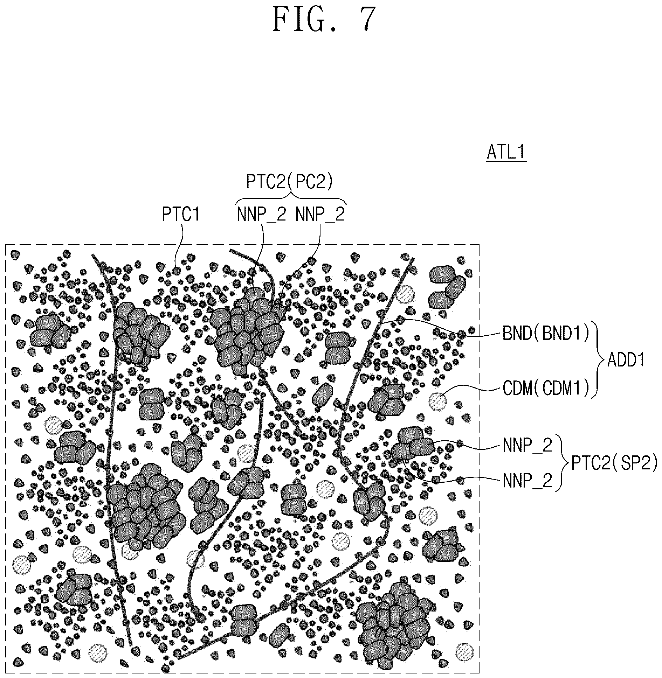

FIG. 7 is an enlarged view showing a first positive electrode active material layer ATL1 of a positive electrode for a rechargeable lithium battery according to embodiments of the present disclosure.

The first positive electrode active material layer ATL1 may include a first particle PTC1, a second particle PTC2, and a first functional additive ADD1. The first functional additive ADD1 may include a first binder BND1 and a first conductive material CDM1 (e.g., a first electrically conductive material CDM1).

The first binder BND1 may combine (e.g., adhere together) the first particle PTC1 and the first conductive material CDM1. In embodiments, the first binder BND1 may stably fix the first positive electrode active material layer ATL1 to the current collector COL1. For example, the first binder BND1 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The first conductive material CDM1 may be used to improve conductivity (e.g., electrical conductivity) of the first positive electrode active material layer ATL1. Any suitable conductive material that does not cause chemical changes (e.g., does not cause an undesirable chemical change) in the first positive electrode active material layer ATL1 may be used as the first conductive material CDM1 without limitation. For example, the first conductive material CDM1 may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, etc. in a form of a metal powder and/or a metal fiber; a conductive polymer (e.g., an electrically conductive polymer) such as a polyphenylene derivative; or a mixture thereof.

Hereinafter, each of the first particle PTC1 and the second particle PTC2 in the first positive electrode active material layer ATL1 will be described in more detail.

### First Particle PTC1

The first particle PTC1 includes an olivine-based lithium compound represented by Formula 1 below.

[Formula 1] Liₐ₁Mn_{z1}Feₓ₁B1_{y1}PO_{4-c1}

In Formula 1 above, 0.8<a1≤1.2, 0.4≤z1≤0.8, 0.2≤x1≤0.6, 0≤y1≤0.05 (e.g. 0.001≤y1≤0.05), and 0≤c1≤0.05 are satisfied. B1 is at least one element selected from the group consisting of Al, Ti, V, and Mg. B1 may be a dopant with which the first particle PTC1 is doped. For example, B1 may include Ti.

The first particle PTC1 may further include carbon derived from the positive electrode active material layer AML1 described above. The first particle PTC1 (e.g. in the form of a single particle) may have a carbon element content of about 0.5 wt% to about 5 wt%, about 0.5 wt% to about 3 wt%, or about 0.5 wt% to about 2 wt%.

The first particle PTC1 may be in the form of a single particle. Herein, the single particle may indicate a single type (or kind) of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. In embodiments, the single particle may be a particle including several crystals. The single particle may be in an isolated form. In embodiments, the single particle may be in the form in which about 2 to about 100 first primary particles are attached to one another.

In one or more embodiments, the first particle PTC1 may be a nanomorphous positive electrode active material. The first particle PTC1 may include at least one first primary particle. In an embodiment, the first particle PTC1 may be in the shape of sphere or oval in which first primary particles are aggregated. For another example, the first particle PTC1 may not have a spherical shape but have an irregular shape even if the first primary particles agglomerate.

In an embodiment, the average particle diameter may indicate a particle diameter (D50) if a cumulative volume is about 50 volume% in a particle size distribution. In an embodiment, the average particle diameter (D50) of the first particle PTC1 may be a value measured using a particle size analyzer.

In an embodiment, the first particle PTC1 may have an average particle diameter of about 500 nm to about 5 µm, about 100 nm to about 3 µm, about 500 nm to about 2.5 µm, or about 1 µm. The average particle diameter (D50) of the first particle PTC1 may be smaller than an average particle diameter (D50) of the second particle PTC2, which will be further described below.

The size of at least one first primary particle constituting the first particle PTC1 may be measured using a scanning electron microscope (SEM). In an embodiment, the size of the first primary particle may indicate a diameter measured by randomly selecting about 30 first primary particles from an electron micrograph of a positive electrode active material. The first primary particle may be uniform (or substantially uniform) in size. At least one first primary particle constituting the first particle PTC1 may have a size of about 100 nm to about 200 nm, about 50 nm to about 150 nm, about 50 nm to about 100 nm, about 100 nm to about 150 nm, or about 200 nm to about 300 nm. The first primary particles may have a smaller average size than second primary particles NNP_2, which will be further described below.

The first particle PTC1 may include at least one primary particle (or single particle). The size of at least one first primary particle constituting the first particle PTC1 may be measured using a scanning electron microscope (SEM). In an embodiment, the size of the first primary particle may indicate a diameter measured by randomly selecting about 30 first primary particles from an electron micrograph of a positive electrode active material. The first primary particle may be uniform (or substantially uniform) in size.

In an embodiment, the first particle PTC1 may include a coating layer on a surface thereof. The coating layer may entirely cover the surface of the first particle PTC1, or may partially cover the surface of the first particle PTC1. For example, the coating layer may include carbon and/or a carbon-containing compound. The coating layer may further include at least one selected from the group consisting of a titanium-containing compound, a magnesium-containing compound, and a vanadium-containing compound. Metal-containing compounds, such as titanium-containing compounds, magnesium-containing compounds, and vanadium-containing compounds, may be, for example, metal oxides, metal hydroxides, metal carbonates, composites thereof, or mixtures thereof. The metal-containing compounds may further include other metals and/or non-metallic elements. For example, the metal-containing compounds may further include lithium. The first particle PTC1 may have improved structural stability and electrical conductivity through the coating layer.

In an embodiment, which is different to embodiments in which the first particle PTC1 is in the form of a single particle, the first particle PTC1 may further include a grain boundary coating layer on a surface of each of the first primary particles. The grain boundary coating layer may be present inside the first particle PTC1. The grain boundary coating layer may be along an interface between the first primary particles inside the first particle PTC1. For example, the grain boundary coating layer may indicate a material on a grain boundary inside the first particle PTC1.

The grain boundary coating layer may include carbon and/or a carbon-containing compound. The grain boundary coating layer may further include at least one selected from the group consisting of a titanium-containing compound, a magnesium-containing compound, and a vanadium-containing compound.

The inside of the first particle PTC1 described above may indicate the entire inside portion of the first particle PTC1 excluding the surface of the first particle PTC1. For example, the inside of the first particle PTC1 may indicate a region of the entire inside from about 10 nm in depth, or from about 10 nm to about 2 µm in depth, with respect to the surface of the first particle PTC1.

The first particle PTC1 may further include a grain boundary coating portion, and may thus have greater structural stability and have a uniform (or substantially uniform) coating layer formed on the surface thereof. In embodiments, the first particle PTC1 may further include a grain boundary coating portion, and may thus have further improved electrical conductivity.

The first particle PTC1 may further include carbon derived from the coating layer and/or the grain boundary coating layer described above. The first particle PTC1 (e.g. in the form of a secondary particle) may have a carbon element content of about 0.5 wt% to about 10 wt%, about 1 wt% to about 3 wt%, or about 1.5 wt% to about 2.5 wt%. For example, the first particle PTC1 may have a greater content of carbon if in the form of a secondary particle than in the form of a single particle.

In one or more embodiments, the first particle PTC1 may be in the shape of a sphere (e.g., may be generally spherical) in which a plurality of first primary particles are aggregated. The first particle PTC1 may have the first primary particles closely aggregated, may thus exhibit at least the following characteristics. The first particle may include the coating layer and/or the grain boundary coating layer described above, and may thus have greater electrical conductivity and improved low-temperature characteristics. Due to the increased bindability of an electrode plate, binder capacity may be reduced. The first particle PTC1 may be in the shape of a sphere or an oval (e.g., may have a generally spherical shape or a generally ovoid shape).

### Second Particle PTC2

The second particle PTC2 includes a lithium compound having a layered structure represented by Formula 2 below.

[Formula 2] Liₐ₂Niₓ₂Co_{y2}Mn_{z2}B2_{b2}O_{2-c2}

In Formula 2 above, 0.8≤a2≤1.2, 0.5≤x2≤0.8, 0.0≤y2≤0.10, 0.1≤z2≤0.35, 0≤b2≤0.1 (e.g. 0.01≤b2≤0.1), 0≤c2≤0.05, and x2 + y2 + z2 + b2 = 1 are satisfied. B2 is at least one element selected from the group consisting of Al, Ti, Mg, Zr, Mo, and Nb. B2 may be a dopant with which the second particle PTC2 is doped. The dopant may allow the second particle PTC2 to have increased surface stability and structural stability.

The second particle PTC2 is one having a combination of high capacity of nickel, thermal stability and low price of manganese, and stable electrochemical properties of cobalt, and may include a layered compound having excellent electrochemical properties.

The second particle PTC2 is a nickel-based active material and includes a lithium nickel-based composite oxide. In an embodiment, the second particle PTC2 may include a high nickel-based positive electrode active material including a high content of nickel. The high nickel-based positive electrode active material may achieve high capacity and high performance. In another embodiment, the second particle PTC2 may include a mid nickel-based positive electrode active material including an intermediate content of nickel. The mid nickel-based positive electrode active material may achieve high capacity and high performance. The second particle PTC2 according to embodiments of the present disclosure is included, allowing rechargeable batteries including the same to obtain high capacity and high energy density.

Referring to FIG. 7, the second particle PTC2 may be in the form of a single particle. Herein, the single particle may indicate a single type (or kind) of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. In embodiments, the single particle may be a particle including several crystals. The single particle may be in an isolated form. In embodiments, the single particle may be in the form in which about 2 to about 100 second primary particles NNP_2 are attached to one another. Herein, the second particle PTC2 in the form of a single particle may be defined as a small particle SP or a fine particle SP.

If the second particle PTC2 is a single particle, the second particle PTC2 may include at least one second primary particle. In an embodiment, the second particle PTC2 may be in the shape of sphere or oval (e.g., may have a generally spherical shape or a generally ovoid shape) in which second primary particles NNP_2 are attached. In another embodiment, the second particle PTC2 may not have a spherical shape but have an irregular shape even if the second primary particles NNP_2 are attached. If the second particle PTC2 is in the form in which second primary particles NNP_2 are attached, the second particle PTC2 may be less structured than a second particle PTC2 in the form of polycrystal, which will be further described below. This means the second particle PTC2 may be in a more irregular form.

In an embodiment, the average particle diameter may indicate a particle diameter (D50) if a cumulative volume is about 50 volume% in a particle size distribution. In an embodiment, the average particle diameter (D50) of the second particle PTC2 may be a value measured using a particle size analyzer. The small particle SP may have an average particle diameter (D50) of about 2 µm to about 5 µm, about 1 µm to about 4 µm, about 2 µm to about 3 µm, about 3 µm to about 7 µm, about 4 µm to about 6 µm, or about 5 µm.

Referring to FIG. 7, the second particle PTC2 may be in the form of polycrystal and may include a secondary particle in which at least two second primary particles NNP_2 are aggregated. For example, one second particle PTC2 may include a plurality of second primary particles NNP_2 aggregated together. The second particle PTC2 composed of the plurality of second primary particles NNP_2 may be in the shape of an agglomerated sphere (e.g., may have a generally spherical shape), or may have an irregular shape even if the second primary particles NNP_2 agglomerate. Herein, the second particle PTC2, which is a secondary particle, may be defined as a large particle PC2.

In an embodiment, the average particle diameter may indicate a particle diameter (D50) if a cumulative volume is about 50 volume% in a particle size distribution. In an embodiment, the large particle PC may have an average particle diameter (D50) of about 10 µm to about 20 µm, about 12 µm to about 15 µm, about 12 µm to about 18 µm, about 14 µm to about 18 µm, about 15 µm to about 20 µm, or about 16 µm. The large particle PC may have a greater average particle diameter (D50) than the small particle SP. The number of second primary particles NNP_2 constituting the large particle PC may be greater than the number of second primary particles NNP_2 constituting the small particle SP. For example, the large particle PC may be more dense and structured than the small particle SP.

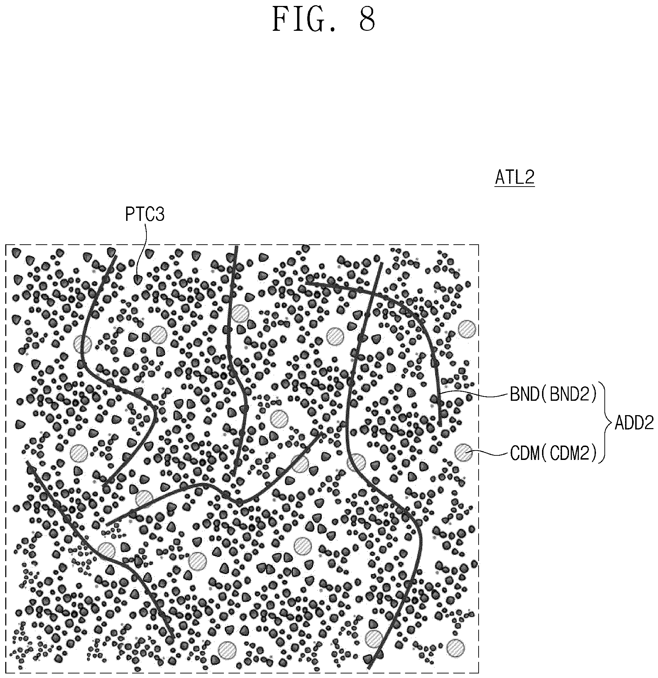

The second particle PTC2 may include both the large particle PC and the small particle SP. The second particle PTC2 may have an average particle diameter (D50) of about 3 µm to about 20 µm, about 4 µm to about 15 µm, about 4 µm to about 10 µm, about 10 µm to about 20 µm, about 12 µm to about 15 µm, or about 5 µm to about 12 µm. For example, the second particle PTC2 may have an average particle diameter (D50) of about 11 µm. The second particle PTC2 may have a greater average particle diameter (D50) than the first particle PTC1 and a third particle PTC3 (FIG. 8).

The second primary particles NNP_2 constituting the second particle PTC2 may have an average size of about 0.5 µm to about 5 µm, about 1 µm to about 3 µm, about 2 µm to about 3 µm, or about 2 µm. In an embodiment, the size of the second primary particles NNP_2 may indicate a diameter measured by randomly selecting about 30 primary particles from an electron micrograph of a positive electrode active material. The second primary particles NNP_2 may be uniform (or substantially uniform) in size. The second primary particles NNP_2 may have a greater average size than the first primary particles.

In an embodiment, the second particle PTC2 may include a coating layer on a surface thereof. The second particle may include the second coating layer, and may thus effectively prevent or reduce structural collapse caused by repeated charging/discharging. Accordingly, rechargeable batteries may have improved lifetime characteristics.

The coating layer may include a boron-containing compound, an aluminium-containing compound, or a combination thereof. Metal-containing compounds in the coating layer may be, for example, metal oxides, metal hydroxides, metal carbonates, composites thereof, or mixtures thereof. The metal-containing compounds may further include other metals and/or non-metallic elements. For example, the coating layer may further include lithium, manganese, and/or nickel.

A method of measuring the metal content in the coating layer of the second particle PTC2 may include performing scanning electron microscopy and energy dispersive X-ray spectroscopy (SEM-EDS) on the second particle PTC2. Through the analysis described above, the content of aluminium and/or boron in the coating layer may be determined. In embodiments, methods of measuring the metal content in the coating layer may include inductively coupled plasma-mass spectrometry (ICP-MS), inductively coupled plasma optical emission spectroscopy (ICP-OES), and/or the like.

In an embodiment, the second particle PTC2 may be in the form having a mix of the large particle PC and the small particle SP. In embodiments in which the second particle PTC2 is in the form having a mix of the large particle PC and the small particle SP in the positive electrode active material, the second particle PTC2 may be called bimodal.

In an embodiment, with respect to a total content of the bimodal second particle PTC2, the small particle SP may be present in a lower content than the large particle PC. In an embodiment, the content of the small particle SP may be about 20 wt% to about 40 wt% with respect to the total content of the second particle PTC2.

The second particle PTC2 may have a smaller BET specific surface area than the first particle PTC2. For example, the second particle may have a BET specific surface area of about 0.3 m²/g to about 1.2 m²/g. The BET (Brunauer-Emmett-Teller) specific surface area of positive electrode active materials may be measured using gas adsorption analysis, which is a widely used method for evaluating surface area and pore structure. BET analysis may be conducted by measuring the amount of nitrogen (N₂) or argon (Ar) gas adsorbed at low temperatures under various pressures (P/P0). The specific surface area (m²/g) is then calculated using the BET equation. For example, The BET specific surface area measurement follows these steps: Sample Preparation: The cathode active material is dried and pre-treated at 300-400 °C to remove moisture and organic contaminants. Gas Adsorption Experiment: The sample is placed in a BET analyzer, and nitrogen or argon gas is adsorbed at specific relative pressures to measure the amount of gas adsorbed. Surface Area Calculation: The BET equation is applied to the adsorption data to determine the specific surface area (SSA, m²/g).

Hereinafter, the first positive electrode active material layer ATL1 will be described in more detail. The first positive electrode active material layer ATL1 includes a first particle PTC1 and a second particle PTC2. In the first positive electrode active material layer ATL1, a weight of the second particle PTC2 may be less than that of the first particle PTC1.

Both the first particle PTC1 and the second particle PTC2 include manganese (Mn), and thus rechargeable batteries including the same may have improved operating voltage. The second particle PTC2 includes nickel, and thus rechargeable batteries including the same may have improved energy density and high capacity compared to the first particle PTC1.

The first particle PTC1 provides benefits such as high stability and long life. Using the structurally stable first particle PTC1 as a key material of the positive electrode active material may make up for relatively low stability and short lifetime of the second particle PTC2.

The positive electrode active material layer according to the present disclosure has the first particle PTC1 and the second particle PTC2 mixed together in a suitable or appropriate ratio, and may thus have improved energy density, capacity, and operation voltage compared to batteries including general lithium iron phosphate-based compounds or lithium manganese iron phosphate-based compounds.

Because the size of the first particle PTC1 may be very small, the binder BND may be required in large quantities to attach the first particle PTC1 to the current collector COL1 (see FIG. 1).

The average particle diameter (D50) of the second particle PTC2 may be several micrometers. In embodiments of the present disclosure, a first positive electrode active material layer ATL1 further including a second particle PTC2 having a large average particle diameter (D50) is provided, and accordingly, the first positive electrode active material layer ATL1 may have improved bindability with respect to the current collector COL1 while including a nano-sized olivine-based compound in large quantities. For example, an electrode plate may be more readily prepared through the first positive electrode active material layer ATL1 in which the first particle PTC1 and the second particle PTC2 are mixed together.

In turn, an electrode plate may be more readily prepared by first attaching the first positive electrode active material layer ATL1 on a current collector. An electrode plate may have improved resistance (e.g., electrical resistance) by first forming the first positive electrode active material layer ATL1 having strong bindability with respect to a current collector. In embodiments, a rechargeable lithium battery having excellent performance may be provided.

### Second positive electrode active material layer ATL2

FIG. 8 is an enlarged view showing a second positive electrode active material layer of a positive electrode for a rechargeable lithium battery according to embodiments of the present disclosure.

Referring to FIG. 8, the second positive electrode active material layer ATL2 may include a third particle PTC3 and a second functional additive ADD2. The second functional additive ADD2 may include a second binder BND2 and a second conductive material CDM2 (e.g., a second electrically conductive material CDM2).

The second binder BND2 may combine (e.g., adhere together) the third particle PTC3 and the second conductive material CDM2. In embodiments, the second binder BND2 may stably fix the second positive electrode active material layer ATL2 onto the first positive electrode active material layer ATL1. In an embodiment, the second binder BND2 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The second conductive material CDM2 may be used to improve conductivity (e.g., electrical conductivity) of the second positive electrode active material layer ATL2. Any suitable conductive material that does not cause chemical changes (e.g., does not cause an undesirable chemical change) in the second positive electrode active material layer ATL2 may be used as the second conductive material CDM2 without limitation. In an embodiment, the second conductive material CDM2 may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, etc. in a form of a metal powder and/or a metal fiber; a conductive polymer (e.g., an electrically conductive polymer) such as a polyphenylene derivative; or a mixture thereof.

### Third Particle PTC3

The third particle PTC3 includes an olivine-based lithium compound represented by Formula 3 below.

[Formula 3] Liₐ₃Mn_{z3}Feₓ₃B3_{y3}PO_{4-c3}

In Formula 3 above, 0.8<a3≤1.2, 0.4≤z3≤0.8, 0≤x3≤0.6 (e.g. 0.2≤x3≤0.6), 0≤y3≤0.05 (e.g. 0.001≤y3≤0.05), and 0≤c3≤0.05 are satisfied. B3 is at least one element selected from the group consisting of Al, Ti, V, and Mg. B3 may be a dopant with which the third particle PTC3 is doped. For example, B3 may include Ti.

The third particle PTC3 may further include carbon derived from the positive electrode active material layer AML1 described above. The third particle PTC3 (e.g. in the form of a single particle) may have a carbon element content of about 0.5 wt% to about 5 wt%, about 0.5 wt% to about 3 wt%, or about 0.5 wt% to about 2 wt%.

The third particle PTC3 may be in the form of a single particle. Herein, the single particle may indicate a single type (or kind) of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. In embodiments, the single particle may be a particle including several crystals. The single particle may be in an isolated form. In embodiments, the single particle may be in the form in which about 2 to about 100 third primary particles are attached to one another.

In one or more embodiments, the third particle PTC3 may be a nanomorphous positive electrode active material. The third particle PTC3 may include at least one third primary particle. In an embodiment, the third particle PTC3 may be in the shape of a sphere or oval (e.g., may have a generally spherical shape or a generally ovoid shape) in which third primary particles are aggregated. In another embodiment, the third particle PTC3 may not have a spherical shape but have an irregular shape even if the third primary particles agglomerate.

In an embodiment, the average particle diameter may indicate a particle diameter (D50) if a cumulative volume is about 50 volume% in a particle size distribution. In an embodiment, the average particle diameter (D50) of the third particle PTC3 may be a value measured using a particle size analyzer.

In an embodiment, the third particle PTC3 may have an average particle diameter of about 500 nm to about 2.5 µm, or about 1 µm. The size of at least one third primary particle constituting the third particle PTC3 may be measured using a scanning electron microscope (SEM). In an embodiment, the size of the third primary particle may indicate a diameter measured by randomly selecting about 30 third primary particles from an electron micrograph of a positive electrode active material. The third primary particles may be uniform (or substantially uniform) in size. The third primary particle may have a size of about 100 nm to about 500 nm, or about 100 nm to about 200 nm.

The third particle PTC3 may include at least one primary particle (or single particle). The size of at least one third primary particle constituting the third particle PTC3 may be measured using a scanning electron microscope (SEM). In an embodiment, the size of the third primary particle may indicate a diameter measured by randomly selecting about 30 third primary particles from an electron micrograph of a positive electrode active material. The third primary particles may be uniform (or substantially uniform) in size.

At least one third primary particle constituting the third particle PTC3 may have a size of about 100 nm to about 200 nm, about 50 nm to about 150 nm, about 50 nm to about 100 nm, about 100 nm to about 150 nm, or about 200 nm to about 300 nm.

In an embodiment, the third particle PTC3 may include a coating layer on a surface thereof. The coating layer may entirely cover the surface of the third particle PTC3, or may partially cover the surface of the third particle PTC3. For example, the coating layer may include carbon and/or a carbon-containing compound. The coating layer may further include at least one selected from the group consisting of a titanium-containing compound, a magnesium-containing compound, and a vanadium-containing compound. Metal-containing compounds, such as titanium-containing compounds, magnesium-containing compounds, and vanadium-containing compounds, may be, for example, metal oxides, metal hydroxides, metal carbonates, composites thereof, or mixtures thereof. The metal-containing compounds may further include other metals and/or non-metallic elements. For example, the metal-containing compounds may further include lithium. The third particle PTC3 may have improved structural stability and electrical conductivity through the coating layer.

In an embodiment, which is different to embodiments in which the third particle PTC3 is in the form of a single particle, the third particle PTC3 may further include a grain boundary coating layer on a surface of each of the third primary particles. The grain boundary coating layer may be present inside the third particle PTC3. The grain boundary coating layer may be along an interface between the third primary particles inside the third particle PTC3. For example, the grain boundary coating layer may indicate a material on a grain boundary inside the third particle PTC3.

The grain boundary coating layer may include carbon and/or a carbon-containing compound. The grain boundary coating layer may further include at least one selected from the group consisting of a titanium-containing compound, a magnesium-containing compound, and a vanadium-containing compound.

The inside of the third particle PTC3 described above may indicate the entire inside portion of the third particle PTC3 excluding the surface of the third particle PTC3. For example, the inside of the third particle PTC3 may indicate a region of the entire inside from about 10 nm in depth, or from about 10 nm to about 2 µm in depth, with respect to the surface of the third particle PTC3.

The third particle PTC3 may further include a grain boundary coating portion, and may thus have greater structural stability and have a uniform (or substantially uniform) coating layer formed on the surface thereof. In embodiments, the third particle PTC3 may further include a grain boundary coating portion, and may thus have further improved electrical conductivity.

The third particle PTC3 may further include carbon derived from the coating layer and/or the grain boundary coating layer described above. The third particle PTC3 (e.g. in the form of a seconday particle) may have a carbon element content of about 0.5 wt% to about 10 wt%, about 1 wt% to about 3 wt%, or about 1.5 wt% to about 2.5 wt%. For example, the third particle PTC3 may have a greater content of carbon if in the form of a secondary particle than in the form of a single particle.

The second particle PTC2 may be present in an amount of about 5 wt% to about 20 wt%, about 10 wt% to about 20 wt%, about 15 wt% to about 30 wt%, about 20 wt% to about 30 wt%, or about 25 wt% to about 40 wt%, with respect to a total weight of the first particle PTC1, the second particle PTC2, and the third particle PTC3 in the positive electrode active material layer AML1.

The positive electrode or positive electrode active material layer AML1 includes manganese (Mn). A total doping content of manganese (Mn) may be defined as the sum of a doping content M1 of manganese (Mn) included in the first positive electrode active material layer ATL1 and a doping content M2 of manganese (Mn) included in the second positive electrode active material layer ATL2. The doping content M1 of manganese (Mn) included in the first positive electrode active material layer ATL1 may be defined as the sum of a product of the manganese (Mn) doping content (z1 in Formula 1 described above) in the first particle PTC1 and a weight ratio of the first particle PTC1, and a product of the manganese (Mn) doping content (z2 in Formula 2 described above) in the second particle PTC2 and a weight ratio of the second particle PTC2. The doping content M2 of manganese (Mn) included in the second positive electrode active material layer ATL2 may be defined as a product of the manganese (Mn) doping content (z3 in Formula 3 described above) in the third particle PTC3 and a weight ratio of the third particle PTC3.

The total doping content of manganese (Mn) in the positive electrode active material layer AML1 may be about 0.40 to about 0.90, about 0.40 to about 0.60, about 0.50 to about 0.90, about 0.50 to about 0.70, about 0.60 to about 0.80, about 0.60 to about 0.70, about 0.50 to about 0.60, or about 0.50.

The positive electrode active material layer AML1 according to embodiments of the present disclosure may have a double layer structure in which the second positive electrode active material layer ATL2 is stacked on the first positive electrode active material layer ATL1. The positive electrode active material layer AML1 may include a functional additive ADD. The first positive electrode active material layer ATL1 may include a first functional additive ADD1, and the second positive electrode active material layer ATL2 may include a second functional additive ADD2. The functional additive ADD may indicate at least one of the first functional additive ADD1 and/or the second functional additive ADD2.

The functional additive may include a conductive material CDM (e.g., an electrically conductive material CDM) and a binder BND. The functional additive may be included, and accordingly, the positive electrode active material layer may have improved performance. For example, materials in a positive electrode active material layer may be well bonded, the bindability of an electrode plate may be improved, and the conductivity (e.g., electrical conductivity) of a positive electrode active material layer may be improved.

The first particle PTC1 may have a very small particle size and thus has poor bindability with respect to the current collector COL1, preventing an electrode plate from being easily prepared (or complicating the preparation of the electrode plate). In an embodiment, if the active material layer is prepared using only the first particle PTC1, functional additives may be utilized in large quantities. For example, a relatively large amount of binder BND may be utilized to attach the first particle PTC1 having a small average particle diameter to a current collector, but a relatively small amount of binder BND may be utilized to attach the second particle PTC2 having a large average particle diameter to a current collector. The amount of the binder BND utilized through the first positive electrode active material layer ATL1 including the first particle PTC1 and the second particle PTC2 may be reduced.

In the positive electrode active material layer AML1 of embodiments of the present disclosure, a double layer structure, in which the first positive electrode active material layer ATL1, which utilizes the functional additive in relatively small quantities to be attached to a current collector, is first bonded, and the second positive electrode active material layer ATL2 is bonded onto the first positive electrode active material layer ATL1, may be applied.

In the positive electrode active material layer AML1 of embodiments of the present disclosure, a double layer structure including the first positive electrode active material layer ATL1, which utilizes the functional additive in relatively small quantities, and the second positive electrode active material layer ATL2 provided onto the first positive electrode active material layer ATL1 may be applied.

If the double layer structure is applied, an electrode plate may be more easily prepared. For example, the first positive electrode active material layer ATL1 in which the first particle PTC1 and the second particle PTC2 are mixed together may be first stacked on a current collector, and the second positive electrode active material layer ATL2 may be stacked on the first positive electrode active material layer ATL1. If the first positive electrode active material layer ATL1 having excellent bindability of an electrode plate is first stacked on a current collector, the functional additives may be utilized in lower amounts, resulting in improved energy density. In embodiments, the first positive electrode active material layer ATL1 having greater bindability with respect to a current collector may be first prepared, and thus an electrode plate may have improved resistance (e.g., improved electrical resistance).

A weight ratio (e.g. amount) of the first binder BND1 in the first positive electrode active material layer ATL1 may be about 1% to about 3 wt%, or about 1.5 wt% to about 3 wt% (relative to the total weight of the first positive electrode active material layer ATL1).

A weight ratio (e.g. amount) of the second binder BND2 in the second positive electrode active material layer ATL2 may be about 1.0 wt% to about 4.0 wt%, or about 2.0 wt% to about 4.0 wt% (relative to the total weight of the second positive electrode active material layer ATL2).

The weight ratio of the first binder BND1 in the first positive electrode active material layer ATL1 may be lower than the weight ratio of the second binder BND2 in the second positive electrode active material layer ATL2. In an embodiment, a ratio of the weight ratio of the second binder BND2 to the weight ratio of the first binder BND1 may be about 1 to about 4, or about 0.65 to about 2.81 (e.g. about 1.01 to about 2.81).

A weight ratio (e.g. amount) of the first conductive material CDM1 in the first positive electrode active material layer ATL1 may be about 1 wt% to about 3 wt%, or about 1.5 wt% to about 3 wt% (relative to the total weight of the first positive electrode active material layer ATL1).

A weight ratio (amount) of the second conductive material CDM2 in the second positive electrode active material layer ATL2 may be about 1.0 wt% to about 4.0 wt%, or about 2.0 wt% to about 4.0 wt% (relative to the total weight of the second positive electrode active material layer ATL2).

The weight ratio of the first conductive material CDM1 in the first positive electrode active material layer ATL1 may be lower than the weight ratio of the second conductive material CDM2 in the second positive electrode active material layer ATL2. In an embodiment, a ratio of the weight ratio of the second conductive material CDM2 to the weight ratio of the first conductive material CDM1 may be about 1 to about 4, or about 0.65 to about 2.81 (e.g. about 1.01 to about 2.81).

A weight ratio (e.g. amount) of the first functional additive ADD1 in the first positive electrode active material layer ATL1 may be about 2 wt% to about 6.0 wt%, or about 3.0 wt% to about 6.0 wt% (relative to the total weight of the first positive electrode active material layer ATL1).

A weight ratio (e.g. amount) of the second functional additive ADD2 in the second positive electrode active material layer ATL2 may be about 2.0 wt% to about 8.0 wt%, or about 4.0 wt% to about 8.0 wt% (relative to the total weight of the second positive electrode active material layer ATL2).

The weight ratio of the first functional additive ADD1 in the first positive electrode active material layer ATL1 may be lower than the weight ratio of the second functional additive ADD2 in the second positive electrode active material layer ATL2.

In an embodiment, the weight ratio of the second functional additive to the weight ratio of the first functional additive may be about 1 to about 4, or about 0.65 to about 2.81 (e.g. about 1.01 to about 2.81).

The first positive electrode active material layer ATL1 may have a first thickness. In an embodiment, the first thickness may increase with a rise in weight of the first particle PTC1 and the second particle PTC2 included in the first positive electrode active material layer ATL1. The second positive electrode active material layer ATL2 may have a second thickness. In an embodiment, the second thickness may increase with a rise in weight of the third particle PTC3 included in the second positive electrode active material layer ATL2. In an embodiment, a ratio of the second thickness to the first thickness may be about 0.4 to about 2.0, about 0.9 to about 1.5, about 0.8 to about 1.2, or about 1. Within the ranges described above, stability and lifetime characteristics may be improved while excellent high voltage performance and energy density are maintained.

In an embodiment, the positive electrode active material layer AML1 of the present disclosure may have a compressed density of about 2.3 g/cc to about 2.8 g/cc.

In an embodiment, the first positive electrode active material layer ATL1 may have a loading level of about 5 mg/cm² to about 10 mg/cm². The second positive electrode active material layer ATL2 may have a loading level of about 5 mg/cm² to about 25 mg/cm².

A rechargeable lithium battery including the positive electrode active material of embodiments of the present disclosure may have improved low-temperature characteristics. In an embodiment, capacity at -20 °C relative to initial capacity (capacity at -20 °C/initial capacity) of the rechargeable lithium battery may be about 40% or greater. For example, capacity at -20 °C relative to initial capacity (capacity at -20 °C/initial capacity) of the rechargeable lithium battery of the present disclosure may be about 40% to about 100%, about 50% to about 100%, or about 96% to about 99%.

A rechargeable lithium battery including the positive electrode active material of the present disclosure may have improved operating voltage. In an embodiment, the rechargeable lithium battery of the present disclosure may have an operating voltage range of about 3 V to about 5 V. For example, the operating voltage range may be about 3 V to about 4.5 V, or about 3.5 V to about 4 V.

A rechargeable lithium battery including the positive electrode active material of embodiments of the present disclosure may have improved lifetime characteristics. In an embodiment, the rechargeable lithium battery of the present disclosure may have a capacity retention of about 98% or greater after 50 times of charging/discharging at a constant current of 0.1 C at the voltage described above. For example, the capacity retention may be about 98% to about 100%, or about 99.8% to about 100%.

### Method for Preparing Positive Electrode Active Material

Hereinafter, Preparation Examples, Examples, and Comparative Examples of the present disclosure will be described. However, the following Examples are presented only as embodiments of the present disclosure, and the present disclosure is not limited by the following Examples.

### Preparation Example 1: Preparation of First Particle PTC1

A manganese iron phosphate precursor (Mn_{0.6}Fe_{0.4}PO₄), lithium carbonate, and titanium dioxide were mixed together at a molar ratio of 1:1.03:0.004. 10 wt% of glucose was added to the resultant mixture. The mixture was subjected to a wet grinding process through ball milling. The mixture was evaporated to dryness on a heating tray and then placed and dried in a vacuum oven at 120 °C for 4 hours. The dried mixture was fired at 750 °C for 10 hours in a nitrogen atmosphere. The fired product was ground to obtain a first particle in the form of a single particle. The average size of the primary particles in the first particle was about 100 nm to about 200 nm.

### Preparation Example 2-1: Preparation of Second Particle PTC2 in the form of Small Particle

A small particle precursor was prepared using a coprecipitation method. Specifically, as raw materials for nickel-based metal hydroxide, nickel sulfate (NiSO₄·6H₂O), cobalt sulfate (CoSO₄·7H₂O), and manganese sulfate (MnSO₄·H₂O) were dissolved in distilled water as a solvent at a molar ratio of 60:10:30 to prepare a metal raw material mixture. The metal raw material mixture, aqueous ammonia, and sodium hydroxide were added into a reactor and subjected to reactions. The slurry solution in the reactor was filtered and washed with high purity distilled water. The washed material was dried in a hot air oven at 210 °C for 24 hours to obtain a small particle precursor (Ni_{0.6}Co_{0.1}Mn_{0.3}(OH)₂) powder having an average particle diameter of about 4 µm.

The small particle precursor and anhydrous lithium hydroxide (LiOH) were dry mixed together using a Henschel mixer. Lithium and transition metal were mixed together at a molar ratio of about 1:1. The transition metal is the sum total of transition metals included in the mid nickel-based precursor (Ni+Co+Mn). A melting agent was further added to the resultant mixture, and the mixture was heat treated (e.g., a firing process) at about 910 °C for 8 hours in an oxygen atmosphere to synthesize small lithium composite oxide particles. The particles were ground using a jet mill at a pressure of 3 bar. The particles were represented by the Formula LiNi_{0.6}Co_{0.1}Mn_{0.3}O₂. Aluminium oxide was added to the resultant oxide and then the resultant mixture was subjected to a second heat treatment at 800 °C for 8 hours in an oxygen atmosphere to prepare a positive electrode active material. The second particle was represented by the Formula LiNi_{0.6}Co_{0.1}Mn_{0.3}O₂.

### Preparation Example 2-2: Preparation of Second Particle PTC2 in the form of Large Particle

A large particle precursor was prepared using a coprecipitation method. Specifically, as raw materials for nickel-based metal hydroxide, nickel sulfate (NiSO₄·6H₂O), cobalt sulfate (CoSO₄·7H₂O), and manganese sulfate (MnSO₄·H₂O) were dissolved in distilled water as a solvent at a molar ratio of 60:10:30 to prepare a metal raw material mixture. A diluted solution of aqueous ammonia (NH₄OH) and sodium hydroxide (NaOH) as a precipitant were prepared to form a complex. Thereafter, the metal raw material mixture, aqueous ammonia, and sodium hydroxide were added into a reactor. Sodium hydroxide was added to maintain the pH of the resultant mixture in the reactor. The mixture was subjected to reactions for about 20 hours while being stirred in the reactor. The slurry solution in the reactor was filtered and washed with high purity distilled water. The resultant washed material was dried in a hot air oven at 750 °C for 24 hours to obtain a large particle precursor (Ni_{0.6}Co_{0.1}Mn_{0.3}(OH)₂) powder having a particle size of about 18 µm.

The large particle precursor and anhydrous lithium hydroxide (LiOH) were dry mixed together using a Henschel mixer. Lithium and transition metal were mixed together at a molar ratio of about 1:1. The transition metal is the sum total of transition metals included in the large particle precursor (Ni+Co+Mn). The resultant mixture was heat treated (e.g., firing process) at about 800 °C for 15 hours in an oxygen atmosphere to synthesize large lithium composite oxide particles. The particles were ground using a jet mill at a pressure of 3 bar. The particles were represented by the Formula LiNi_{0.6}Co_{0.1}Mn_{0.3}O₂. Aluminium oxide was added to the resultant oxide and then the resultant mixture was subjected to a second heat treatment at 800 °C for 8 hours in an oxygen atmosphere to prepare a positive electrode active material. The second particle was represented by the Formula LiNi_{0.6}Co_{0.1}Mn_{0.3}O₂.

### Preparation Example 2-3: Preparation of Bimodal Second Particle PTC2

The small particle of Preparation Example 2-1 and the large particle of Preparation Example 2-2 were mixed together at a weight ratio of 30:70 to prepare a bimodal second particle.

### Preparation Example 3: Preparation of Third Particle PTC3

A manganese iron phosphate precursor (Mn_{0.6}Fe_{0.4}PO₄), lithium carbonate, and titanium dioxide were mixed together at a molar ratio of 1:1.03:0.004. 10 wt% of glucose was added to the resultant mixture. The mixture was subjected to a wet grinding process through ball milling. The mixture was evaporated to dryness on a heating tray and then placed and dried in a vacuum oven at 120 °C for 4 hours. The dried mixture was fired at 750 °C for 10 hours in a nitrogen atmosphere. The fired product was ground to obtain a third particle in the form of a single particle. The average size of the primary particles in the third particle was about 100 nm to about 200 nm.

### Preparation of Single Layer Electrode Plate

### Comparative Example 1-1

The first particle of Preparation Example 1 and the second particle of Preparation Example 2-1 were mixed together at a weight ratio of 30:70 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate. The total Mn doping content for Comparative Example 1-1 was calculated as 0.6 (z1 in the first particle) x 0.3 (weight ratio) + 0.3 (z2 in the second particle) x 0.7 (weight ratio), which is 0.39.

### Comparative Example 1-2

The first particle of Preparation Example 1 and the second particle of Preparation Example 2-1 were mixed together at a weight ratio of 40:60 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

### Comparative Example 1-3

The first particle of Preparation Example 1 and the second particle of Preparation Example 2-1 were mixed together at a weight ratio of 50:50 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

### Comparative Example 1-4

The first particle of Preparation Example 1 and the second particle of Preparation Example 2-1 were mixed together at a weight ratio of 60:40 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

### Comparative Example 1-5

The first particle of Preparation Example 1 and the second particle of Preparation Example 2-1 were mixed together at a weight ratio of 70:30 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

### Comparative Example 1-6

The first particle of Preparation Example 1 and the second particle of Preparation Example 2-1 were mixed together at a weight ratio of 80:20 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

### Comparative Example 1-7

The first particle of Preparation Example 1 and the second particle of Preparation Example 2-1 were mixed together at a weight ratio of 90:10 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

### Comparative Example 2-1

The first particle of Preparation Example 1 and the second particle of Preparation Example 2-2 were mixed together at a weight ratio of 70:30 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

### Comparative Example 2-2

The first particle of Preparation Example 1 and the second particle of Preparation Example 2-3 were mixed together at a weight ratio of 70:30 and dispersed in N-methylpyrrolidone along with a conductive material (carbon black) and a binder (polyvinylidene fluoride) to prepare a positive electrode active material slurry. The positive electrode active material slurry was applied onto a positive electrode current collector and dried to prepare a single layer electrode plate.

### Preparation of Double Layer Electrode Plate

### Example 1-1

The first particle of Preparation Example 1 and the second particle of Preparation Example 2-1 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 30:40:30. Through a roll press, a positive electrode in which the current collector, the first positive electrode active material layer, and the second positive electrode active material layer were stacked in this order was prepared.

### Example 1-2

The first particle of Preparation Example 1 and the second particle of Preparation Example 2-2 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 30:40:30. Through a roll press, a positive electrode in which the current collector, the first positive electrode active material layer, and the second positive electrode active material layer were stacked in this order was prepared.

### Example 1-3

The first particle of Preparation Example 1 and the second particle of Preparation Example 2-3 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

The first positive electrode active material slurry was applied onto a positive electrode current collector and dried to form a first positive electrode active material layer. The second positive electrode active material slurry was applied onto the first positive electrode active material layer and dried to form a second positive electrode active material layer.

In this case, an active material layer was formed such that the first particle, the second particle, and the third particle in the double layer positive electrode were present at a weight ratio of 30:40:30. Through a roll press, a positive electrode in which the current collector, the first positive electrode active material layer, and the second positive electrode active material layer were stacked in this order was prepared.

### Example 2-1

An active material layer was formed in substantially the same manner as in Example 1-1, except that the first particle, the second particle, and the third particle in the double layer positive electrode were present at a weight ratio of 35:30:35.

### Example 2-2

An active material layer was formed in substantially the same manner as in Example 1-2, except that the first particle, the second particle, and the third particle in the double layer positive electrode were present at a weight ratio of 35:30:35.

### Example 2-3

An active material layer was formed in substantially the same manner as in Example 1-3, except that the first particle, the second particle, and the third particle in the double layer positive electrode were present at a weight ratio of 35:30:35.

### Example 3-1

An active material layer was formed in substantially the same manner as in Example 1-1, except that the first particle, the second particle, and the third particle in the double layer positive electrode were present at a weight ratio of 40:20:40.

### Example 3-2

An active material layer was formed in substantially the same manner as in Example 1-2, except that the first particle, the second particle, and the third particle in the double layer positive electrode were present at a weight ratio of 40:20:40.

### Example 3-3

An active material layer was formed in substantially the same manner as in Example 1-3, except that the first particle, the second particle, and the third particle in the double layer positive electrode were present at a weight ratio of 40:20:40.

### Comparative Example 3-1

The first particle of Preparation Example 1 and the second particle of Preparation Example 2-1 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

Unlike Example 1-1, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

### Comparative Example 3-2

The first particle of Preparation Example 1 and the second particle of Preparation Example 2-1 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

Unlike Example 2-1, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

### Comparative Example 3-3

The first particle of Preparation Example 1 and the second particle of Preparation Example 2-1 were dispersed in N-methylpyrrolidone along with a conductive material (carbon black) and a binder (polyvinylidene fluoride) to prepare a first positive electrode active material slurry. The third particle of Preparation Example 3 was dispersed in N-methylpyrrolidone along with a conductive material (carbon black) and a binder (polyvinylidene fluoride) to prepare a second positive electrode active material slurry.

Unlike Example 3-1, the second positive electrode active material slurry was first applied onto a positive electrode current collector and dried to form a first positive electrode active material layer. Thereafter, the first positive electrode active material slurry was applied onto the first positive electrode active material layer and dried to form a second positive electrode active material layer.

### Preparation of Negative Electrode

Graphite, a binder, and a conductive material were mixed together in an N-methylpyrrolidone solvent to prepare a negative electrode active material slurry. The negative electrode active material slurry was applied onto a copper current collector, dried, and rolled to prepare a negative electrode.

### Preparation of Rechargeable Lithium Battery

A coin half-cell was prepared using the prepared positive electrode and negative electrode. A polypropylene film (Celgard 3510) was used as a separator. As an electrolyte, an electrolyte solution obtained by mixing 1.3 M LiPF₆ together with a mixed solvent of ethylene carbonate (EC), diethyl carbonate (DEC), and fluoroethylene carbonate (FEC) (volume ratio: 2:6:2) was used.

**Table 1**

| Item | Electrode plate structure | Mn doping content when mixed | Particle content (mol%) | | |
|---|---|---|---|---|---|
| | | | First particle | Second Particle (form) | Third particle |
| Comparative Example 1-1 | Single layer | 0.39 | 30 | 70 (small particle) | - |
| Comparative Example 1-2 | Single layer | 0.42 | 40 | 60 (small particle) | - |
| Comparative Example 1-3 | Single layer | 0.45 | 50 | 50 (small particle) | - |
| Comparative Example 1-4 | Single layer | 0.48 | 60 | 40 (small particle) | - |
| Comparative Example 1-5 | Single layer | 0.51 | 70 | 30 (small particle) | - |
| Comparative Example 1-6 | Single layer | 0.54 | 80 | 20 (small particle) | - |
| Comparative Example 1-7 | Single layer | 0.57 | 90 | 10 (small particle) | - |
| Comparative Example 2-1 | Single layer | 0.51 | 70 | 30 (large particle) | - |
| Comparative Example 2-2 | Single layer | 0.51 | 70 | 30 (bimodal) | - |
| Comparative Example 3-1 | Double layer | 0.48 | 30 | 40 (small particle) | 30 |
| Comparative Example 3-2 | Double layer | 0.51 | 35 | 30 (small particle) | 35 |
| Comparative Example 3-3 | Double layer | 0.54 | 40 | 20 (small particle) | 40 |
| Example 1-1 | Double layer | 0.48 | 30 | 40 (small particle) | 30 |
| Example 1-2 | Double layer | 0.48 | 30 | 40 (large particle) | 30 |
| Example 1-3 | Double layer | 0.48 | 30 | 40 (bimodal) | 30 |
| Example 2-1 | Double layer | 0.51 | 35 | 30 (small particle) | 35 |
| Example 2-2 | Double layer | 0.51 | 35 | 30 (large particle) | 35 |
| Example 2-3 | Double layer | 0.51 | 35 | 30 (bimodal) | 35 |
| Example 3-1 | Double layer | 0.54 | 40 | 20 (small particle) | 40 |
| Example 3-2 | Double layer | 0.54 | 40 | 20 (large particle) | 40 |
| Example 3-3 | Double layer | 0.54 | 40 | 20 (bimodal) | 40 |

### Evaluation Example 1: Analysis of Positive Electrode Active Material Surface

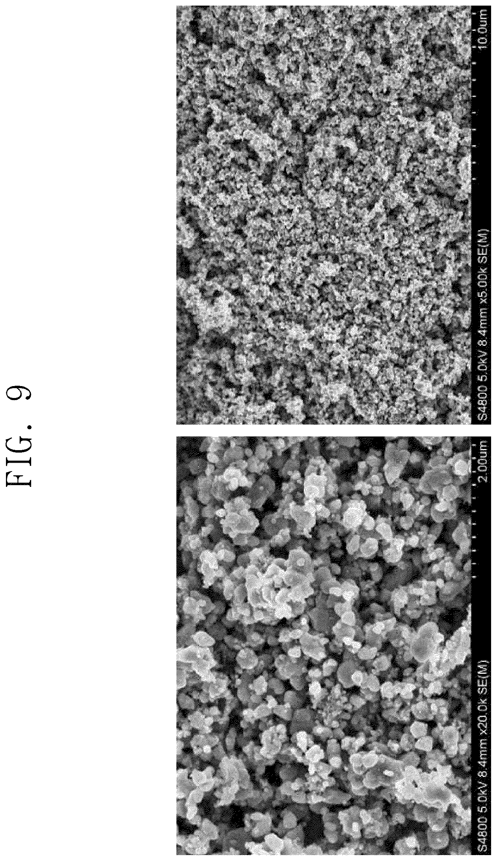

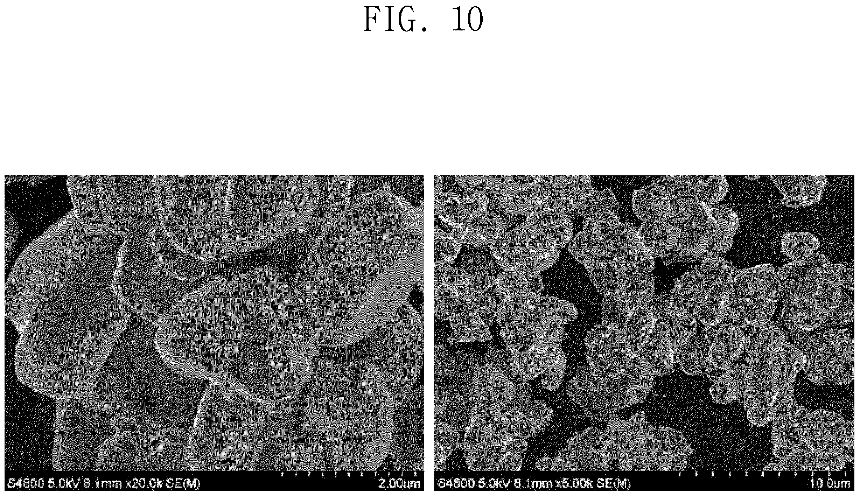

An SEM image of the first particle prepared in Preparation Example 1 is shown in FIG. 9. An SEM image of the second particle prepared in Preparation Example 2-3 is shown in FIG. 10. Referring to FIG. 9, it can be seen that the first particle according to an embodiment of the present disclosure is in the form of a nano-sized fine single particle. Referring to FIG. 10, it can be seen that the second particle according to an embodiment of the present disclosure is in the form of a single particle or in the form in which a plurality of single particles are aggregated. Compared to the first particle, the second particle takes a variety of forms and has large particles.

### Evaluation Example 2: Evaluation of Active Material

Pellet density (PD) of the positive electrode active material layers prepared according to Examples 1-1 to 3-3 and Comparative Examples 1-1 to 3-3 was measured, and the results are shown in Table 1.

**Table 2**

| Item | Pellet density (g/cc) |
|---|---|
| Comparative Example 1-1 | 2.88 |
| Comparative Example 1-2 | 2.80 |
| Comparative Example 1-3 | 2.73 |
| Comparative Example 1-4 | 2.65 |
| Comparative Example 1-5 | 2.58 |
| Comparative Example 1-6 | 2.50 |
| Comparative Example 1-7 | 2.43 |
| Comparative Example 2-1 | 2.56 |
| Comparative Example 2-2 | 2.75 |
| Comparative Example 3-1 | 2.65 |
| Comparative Example 3-2 | 2.58 |
| Comparative Example 3-3 | 2.50 |
| Example 1-1 | 2.65 |
| Example 1-2 | 2.70 |
| Example 1-3 | 2.68 |
| Example 2-1 | 2.57 |
| Example 2-2 | 2.58 |
| Example 2-3 | 2.58 |
| Example 3-1 | 2.50 |
| Example 3-2 | 2.55 |
| Example 3-3 | 2.53 |

Referring to Table 2, it can be seen that the positive electrode active material layers according to Examples 1-1 to 1-3 are capable of keeping the pellet density and the energy density at similar levels when compared to Comparative Examples 1-4 to 1-6, each having a single layer structure.

### Evaluation Example 3: Evaluation of Battery Properties

Properties of rechargeable lithium batteries prepared using the positive electrodes of Examples 1-1 to 3-3 and Comparative Examples 1-1 to 3-3 were evaluated.

For initial charging/discharging, the rechargeable lithium batteries were initially charged at a constant current of 0.2 C and a constant voltage of 4.25 V, and after 10 minutes, were discharged up to 2.5 V at a constant current of 0.2 C. Thereafter, the charging/discharging was repeated 50 times at 45 °C and 1.0 C/1.0 C. In addition, a coin cell was additionally prepared and measured at -20 °C for a capacity of 0.2 C. The results of evaluating the battery properties are shown in Table 3 below.

**Table 3**

| Item | 0.2 C charge amoun t (mAh/g ) | 0.2 C discha rge amoun t (mAh/ g) | 0.2 C efficiency (%) | Average voltage | -20 capacity (mAh/g) | 1 C lifetime (%, 50cy) |
|---|---|---|---|---|---|---|
| Comparat ive Example 1-1 | 201.4 | 180.9 | 89.8% | 74 | 3.64 | 98.6 |
| Comparat ive Example 1-2 | 194.8 | 175.8 | 90.2% | 77 | 3.63 | 98.7 |
| Comparat ive Example 1-3 | 188.2 | 170.7 | 90.7% | 81 | 3.63 | 98.8 |
| Comparat ive Example 1-4 | 181.5 | 165.5 | 91.2% | 84 | 3.62 | 98.8 |
| Comparat ive Example 1-5 | 174.9 | 160.4 | 91.7% | 87 | 3.62 | 98.9 |
| Comparat ive Example 1-6 | 168.3 | 155.3 | 92.3% | 90 | 3.61 | 99.0 |
| Comparat ive Example 1-7 | 161.6 | 150.1 | 92.9% | 93 | 3.61 | 99.0 |
| Comparat ive Example 2-1 | 173.9 | 159.8 | 91.9% | 87 | 3.63 | 99 |
| Comparat ive Example 2-2 | 175.1 | 160.3 | 91.5% | 86.1 | 3.62 | 99.2 |
| Comparat ive Example 3-1 | 179.0 | 169.1 | 94.5% | 79.6 | 3.62 | 95.3 |
| Comparat ive Example 3-2 | 172.3 | 157.9 | 91.6% | 82.7 | 3.62 | 95.4 |
| Comparat ive Example 3-3 | 166.1 | 153.2 | 92.2% | 85.8 | 3.61 | 95.5 |
| Example 1-1 | 181.5 | 165.5 | 91.2% | 83.6 | 3.62 | 98.8 |
| Example 1-2 | 180.9 | 165.1 | 91.3% | 85.1 | 3.62 | 98.9 |
| Example 1-3 | 181.8 | 166.1 | 91.4% | 84.4 | 3.62 | 98.9 |
| Example 2-1 | 176.2 | 162.1 | 92.0% | 70 | 3.62 | 99.5 |
| Example 2-2 | 174.5 | 160.1 | 91.7% | 88.9 | 3.62 | 99.2 |
| Example 2-3 | 175.2 | 160.6 | 91.7% | 87.8 | 3.62 | 99.0 |
| Example 3-1 | 168.2 | 155.0 | 92.2% | 89.8 | 3.61 | 98.7 |
| Example 3-2 | 167.8 | 155.1 | 92.4% | 91.1 | 3.61 | 99.0 |
| Example 3-3 | 168.7 | 155.8 | 92.4% | 90.5 | 3.61 | 98.8 |

Referring to Table 3, it can be seen that the rechargeable lithium batteries according to Examples 1-1 to 3-3 have improved 1 C lifetime compared to the rechargeable lithium batteries according to Comparative Examples 1-1 to 1-7. Considering charging/discharging efficiency and average voltage of the rechargeable lithium batteries according to Examples 1-1 to 3-3, the rechargeable lithium batteries are usable as batteries having excellent characteristics overall.

### Evaluation Example 4: Content of Functional Additive in Active Material Layer

Weight ratios of functional additives utilized for preparing the positive electrodes in the single layer structures of Comparative Examples 1-1 to 2-2 were measured.

The weight ratios of the functional additives in the first positive electrode active material layers and the weight ratios of the functional additives in the second positive electrode active material layers utilized for preparing the positive electrodes in the double layer structures of Comparative Examples 3-1 to 3-3 were measured.

The weight ratios of the functional additives in the first positive electrode active material layers and the weight ratios of the functional additives in the second positive electrode active material layers in the positive electrodes of Examples 1-1 to 3-3 were measured. The weight ratios of the functional additives in the active material layers are shown in Table 4.

**Table 4**

| | Electrode plate structure | Weight ratio or functional additive (with respect to 100 parts by weight of active material layer) | |
|---|---|---|---|
| | | Weight ratio of first functional additive | Weight ratio of second functional additive |
| Comparat ive Example 1-1 | Single layer | 4.0 wt% | |
| Comparat ive Example 1-2 | Single layer | 4.0 wt% | |
| Comparat ive Example 1-3 | Single layer | 4.0 wt% | |
| Comparat ive Example 1-4 | Single layer | 4.0 wt% | |
| Comparat ive Example 1-5 | Single layer | 4.0 wt% | |
| Comparat ive Example 1-6 | Single layer | 4.0 wt% | |
| Comparat ive Example 1-7 | Single layer | 4.0 wt% | |
| Comparat ive Example 2-1 | Single layer | 4.0 wt% | |
| Comparat ive Example 2-2 | Single layer | 4.0 wt% | |
| Comparat ive Example 3-1 | Double layer | 6.0 wt% | 2.0 wt% |
| Comparat ive Example 3-2 | Double layer | 6.0 wt% | 2.0 wt% |
| Comparat ive Example 3-3 | Double layer | 6.0 wt% | 2.0 wt% |
| Example 1-1 | Double layer | 2.0 wt% | 6.0 wt% |
| Example 1-2 | Double layer | 2.0 wt% | 6.0 wt% |
| Example 1-3 | Double layer | 2.0 wt% | 6.0 wt% |
| Example 2-1 | Double layer | 2.0 wt% | 6.0 wt% |
| Example 2-2 | Double layer | 2.0 wt% | 6.0 wt% |
| Example 2-3 | Double layer | 2.0 wt% | 6.0 wt% |
| Example 3-1 | Double layer | 2.0 wt% | 6.0 wt% |
| Example 3-2 | Double layer | 2.0 wt% | 6.0 wt% |
| Example 3-3 | Double layer | 2.0 wt% | 6.0 wt% |

Referring to Examples 1-1 to 3-3, the weight ratio of the first functional additive in the first positive electrode active material layer is lower than the weight ratio of the second functional additive in the second positive electrode active material layer. The functional additive may be less utilized to stack the first positive electrode active material layer on the current collector, and in turn, preparing an electrode plate may be facilitated by first forming the first positive electrode active material layer in combination with the first positive electrode active material slurry, which is easy to prepare the positive electrode.

Unlike the Examples of the present disclosure, in Comparative Examples 3-1 to 3-3, the first positive electrode active material layer and the second positive electrode active material layer were formed in reverse. In this case, it can be seen that the functional additives are utilized in large quantities to form the first positive electrode active material layer on the current collector.

For example, when compared with Comparative Examples 1-4, 1-5, and 1-6 each having a single layer structure, it can be seen that a total amount of functional additives is less in the Examples according to the present disclosure. When compared to a single layer structure having the same content of active material, the content of functional additives is reduced, and thus the active material layer may have improved energy density.

Unlike the Examples of the present disclosure, in Comparative Examples 3-1 and 3-3, the active materials forming the first positive electrode active material layer and the active materials forming the second positive electrode active material layer were formed in reverse. In this case, it can be seen that the functional additives are utilized in large quantities to form the first positive electrode active material layer on the current collector. That is, instead of directly binding the first particle having poor bindability to an electrode plate, first providing a first positive electrode active material layer having strong bindability may improve the packing density and/or energy density compared to the positive electrode having the same content of active material.

### Evaluation Example 5: Resistance and Energy Density Evaluation

Characteristics of rechargeable lithium batteries prepared using positive electrodes each from the Examples and Comparative Examples were evaluated.

For initial charging/discharging, the rechargeable lithium batteries were initially charged at a constant current of 0.2 C and after 10 minutes of rest, discharged up to 3.0 V at a constant current of 0.2 C, and then average voltage was evaluated. the rechargeable lithium batteries were subjected to 1 hour of rest at SOC50, and discharged at 1.0 C for 10 seconds, and then subjected to another 10 seconds of rest. In this case, cell resistance (DC-IR) was calculated by dividing the difference between the voltage after the end of the discharge and the voltage after the 10 seconds of rest by the current. The results are shown in Table 5 below.

**Table 5**

| | DCIR, SOC50 (Ω, 0.2 C/1.0 C) | Energy Density |
|---|---|---|
| Comparative Example 1-1 | 16.8 | 658 |
| Comparative Example 1-2 | 20.5 | 638 |
| Comparative Example 1-3 | 24.3 | 619 |
| Comparative Example 1-4 | 28.0 | 599 |
| Comparative Example 1-5 | 31.8 | 578 |
| Comparative Example 1-6 | 35.5 | 556 |
| Comparative Example 1-7 | 39.3 | 533 |
| Comparative Example 2-1 | 31.2 | 578 |
| Comparative Example 2-2 | 33 | 579 |
| Comparative Example 3-1 | 32.6 | 593 |
| Comparative Example 3-2 | 36.4 | 570 |
| Comparative Example 3-3 | 40.1 | 549 |
| Example 1-1 | 28.0 | 599 |
| Example 1-2 | 31.2 | 598 |
| Example 1-3 | 29.6 | 601 |
| Example 2-1 | 23.2 | 583 |
| Example 2-2 | 34.1 | 577 |
| Example 2-3 | 32.9 | 580 |
| Example 3-1 | 35.5 | 556 |
| Example 3-2 | 38.2 | 554 |
| Example 3-3 | 36.9 | 557 |

According to Table 5, when comparing the positive electrodes according to Examples 1-1, 2-1, and 3-1 of the present disclosure with the positive electrodes of Comparative Examples 3-1 to 3-3, it can be seen that the positive electrodes according to Examples have low resistance (e.g., low electrical resistance). In the Examples and Comparative Examples, the first positive electrode active material layer and the second positive electrode active material layer are reversely configured, and as in the Examples of the present disclosure, a portion in contact with a current collector is formed with a first positive electrode active material layer having strong bindability, and accordingly, the entire positive electrode may have reduced resistance values (e.g., reduced electrical resistance values).

Accordingly, a double layer structure like the Examples according to embodiments of the present disclosure is provided, and thus an electrode plate may have reduced resistance (e.g., reduced electrical resistance) and improved energy density.

A positive electrode according to embodiments of the present disclosure includes a first positive electrode active material layer including an olivine-based first particle having a size of hundreds of nanometers to several micrometers and a layered second particle having a size of several micrometers, and a second positive electrode active material layer including an olivine-based third particle having a size of hundreds of nanometers to several micrometers and stacked on the first positive electrode active material layer, and may thus have improved pellet density, capacity, and energy density. In the positive electrode according to the present disclosure, an electrode plate may be readily prepared and have improved resistance (e.g., improved electrical resistance). A rechargeable lithium battery according to embodiments of the present disclosure may have relatively improved lifetime.

The descriptions described above are example embodiments of implementing the present disclosure. The present disclosure will include both the embodiments described above and embodiments that may be easily modified or simply changed in design. In embodiments, the subject matter of the present disclosure will also include technologies that may be easily modified and implemented using embodiments. Therefore, the scope of the present disclosure should not be limited to the embodiments described above, but should be defined by the following claims as well as the equivalents thereof.

## Claims

1. A positive electrode for a rechargeable lithium battery, comprising:
a current collector;
a first positive electrode active material layer on the current collector; and
a second positive electrode active material layer on the first positive electrode active material layer,
wherein the first positive electrode active material layer comprises a first particle represented by Formula 1 below and having an olivine structure, and a second particle represented by Formula 2 below and having a layered structure,
the second positive electrode active material layer comprises a third particle represented by Formula 3 below and having an olivine structure,
the first particle and the third particle are each in the form of a single particle, and
the second particle has a greater average particle diameter than that of each of the first particle and the third particle,
[Formula 1] Liₐ₁Mn_{z1}Feₓ₁B1_{y1}PO_{4-c1}
wherein in Formula 1 above, B1 is at least one element selected from the group consisting of Al, Ti, V, and Mg, and 0.8<a1≤1.2, 0.4≤z1≤0.8, 0.2≤x1≤0.6, 0≤y1≤0.05, 0≤c1≤0.05, and x1 + y1 + z1 = 1 are satisfied,
[Formula 2] Liₐ₂Niₓ₂CO_{y2}Mn_{z2}B2_{b2}O_{2-c2}
wherein in Formula 2 above, B2 is at least one element selected from the group consisting of Al, Ti, Mg, Zr, Mo, and Nb, and 0.8≤a2≤1.2, 0.5≤x2≤0.8, 0.0≤y2≤0.10, 0.1≤z2≤0.35, 0≤b2≤0.1 0≤c2≤0.05, and x2 + y2 + z2 + b2 = 1 are satisfied, and
[Formula 3] Liₐ₃Mn_{z3}Feₓ₃B3_{y3}PO_{4-c3}
wherein in Formula 3 above, B3 is at least one element selected from the group consisting of Al, Ti, V, and Mg, and 0.8<a3≤1.2, 0.4≤z3≤0.8, 0≤x3≤0.6, 0≤y3≤0.05, 0≤c3≤0.05, and x3 + y3 + z3 = 1 are satisfied.

2. The positive electrode for a rechargeable lithium battery as claimed in claim 1, wherein the first particle comprises at least one first primary particle,
the third particle comprises at least one third primary particle,
the first primary particle has an average size of about 100 nm to about 200 nm,
the first particle has an average particle diameter (D50) of about 0.5 µm to about 2.5 µm,
the third primary particle has an average size of about 100 nm to about 200 nm, and
the third particle has an average particle diameter (D50) of about 0.5 µm to about 2.5 µm.

3. The positive electrode for a rechargeable lithium battery as claimed in claim 1 or claim 2, wherein with respect to a total weight of the first particle, the second particle, and the third particle in the positive electrode, a weight ratio of the second particle is about 20 wt% to about 30 wt%.

4. The positive electrode for a rechargeable lithium battery as claimed in any one of claims 1 to 3, wherein a total doping content of manganese (Mn) in the positive electrode is about 0.50 to about 0.60.

5. The positive electrode for a rechargeable lithium battery as claimed in any one of claims 1 to 4, wherein a thickness ratio of the second positive electrode active material layer to the first positive electrode active material layer is about 0.8 to about 1.2.

6. The positive electrode for a rechargeable lithium battery as claimed in any one of claims 1 to 5, wherein the second particle is a bimodal-type particle comprising a large particle and a small particle.

7. The positive electrode for a rechargeable lithium battery as claimed in claim 6, wherein the small particle has an average particle diameter (D50) of about 2 µm to about 5 µm.

8. The positive electrode for a rechargeable lithium battery as claimed in claim 6 or claim 7, wherein the large particle has an average particle diameter (D50) of about 10 µm to about 20 µm.

9. The positive electrode for a rechargeable lithium battery as claimed in any one of claims 6 to 8, wherein with respect to a total content of the second particle, the small particle is present in a lower content than the large particle.

10. The positive electrode for a rechargeable lithium battery as claimed in any one of claims 6 to 9, wherein with respect to a total content of the second particle, the small particle content of the second particle is about 20 wt% to about 40 wt%.

11. A positive electrode for a rechargeable lithium battery, comprising:
a current collector;
a first positive electrode active material layer on the current collector; and
a second positive electrode active material layer on the first positive electrode active material layer,
wherein the first positive electrode active material layer comprises a first particle represented by Formula 1 below and having an olivine structure, a second particle represented by Formula 2 below and having a layered structure, and a first functional additive,
the second positive electrode active material layer comprises a third particle represented by Formula 3 below and having an olivine structure, and a second functional additive,
the first functional additive and the second functional additive each include a conductive material and a binder, and
the first functional additive in the first positive electrode active material layer has a lower weight ratio than the second functional additive in the second positive electrode active material layer,
[Formula 1] Liₐ₁Mn_{z1}Feₓ₁B1_{y1}PO_{4-c1}
wherein in Formula 1 above, B1 is at least one element selected from the group consisting of Al, Ti, V, and Mg, and 0.8<a1≤1.2, 0.4≤z1≤0.8, 0.2≤x1≤0.6, 0≤y1≤0.05, 0≤c1≤0.05, and x1 + y1 + z1 = 1 are satisfied,
[Formula 2] Liₐ₂Niₓ₂Co_{y2}Mn_{z2}B2_{b2}O_{2-c2}
wherein in Formula 2 above, B2 is at least one element selected from the group consisting of Al, Ti, Mg, Zr, Mo, and Nb, and 0.8≤a2≤1.2, 0.5≤x2≤0.8, 0.0≤y2≤0.10, 0.1≤z2≤0.35, 0≤b2≤0.1 0≤c2≤0.05, and x2 + y2 + z2 + b2 = 1 are satisfied, and
[Formula 3] Liₐ₃Mn_{z3}Feₓ₃B3_{y3}PO_{4-c3}
wherein in Formula 3 above, B3 is at least one element selected from the group consisting of Al, Ti, V, and Mg, and 0.8<a3≤1.2, 0.4≤z3≤0.8, 0≤x3≤0.6, 0≤y3≤0.05, 0≤c3≤0.05, and x3 + y3 + z3 = 1 are satisfied.

12. The positive electrode for a rechargeable lithium battery as claimed in claim 11, wherein the weight ratio of the second functional additive to the weight ratio of the first functional additive is about 1 to about 4.

13. The positive electrode for a rechargeable lithium battery as claimed in claim 11 or claim 12, wherein the weight ratio of the first functional additive is about 3.0 wt% to about 6.0 wt%.

14. The positive electrode for a rechargeable lithium battery as claimed in any one of claims 11 to 13, wherein the weight ratio of the second functional additive is about 4.0 wt% to about 8.0 wt%.

15. The positive electrode for a rechargeable lithium battery as claimed in any one of claims 11 to 14, wherein a thickness ratio of the second positive electrode active material layer to the first positive electrode active material layer is about 0.8 to about 1.2.
